# EUROPÄISCHE PATENTANMELDUNG

(11) **EP 2 221 643 A2**
(43) Veröffentlichungstag der Anmeldung: **25.08.2010**
(21) Anmeldenummer: 10000956.2
(22) Anmeldetag: 30.01.2010
(51) Int. Cl.: G01V 8/10

(54) **Sensor zur Erfassung von Objekten**

(30) Priorität: 21.02.2009 DE 102009010046
(71) Anmelder: Leuze electronic GmbH + Co. KG, 73277 Owen/Teck (DE)
(72) Erfinder: Klaiber, Jörg, 71157 Hildrizhausen (DE); Schweikert, Uwe, 73271 Holzmaden (DE)
(74) Vertreter: Ruckh, Rainer Gerhard

(57) **Zusammenfassung**

Die Erfindung betrifft einen Sensor (1) zur Erfassung von Objekten in einem Überwachungsbereich, mit wenigstens einem Sensorgehäuse (2), in welchem Sensorkomponenten integriert sind. An einer Außenseite des Sensorgehäuses (2) ist ein mittels eines Werkzeugs betätigbares Bedienteil (8) zur Einstellung eines Stellelements vorgesehen. An dem Bedienteil (8) ist ein manuell bedienbarer Knopf (11) anbringbar. Dieser ist mit dem Bedienteil (8) so verbunden, dass durch die manuelle Bedienung des Knopfes (11) das Bedienteil (8) betätigt werden kann.

## Beschreibung

Die Erfindung betrifft einen Sensor zur Erfassung von Objekten in einem Überwachungsbereich.

Derartige Sensoren können beispielsweise als optische Sensoren ausgebildet sein, die jeweils wenigstens einen Lichtstrahlen emittierenden Sender und einen Lichtstrahlen empfangenden Empfänger als optische Sensorkomponenten zur Objektdetektion aufweisen. Als elektronische Sensorkomponente ist typischerweise eine Auswerteeinheit vorgesehen, in welcher aus den Empfangssignalen am Ausgang des Empfängers ein Objektfeststellungssignal generiert wird. Die Sensorkomponenten derartiger Sensoren sind in wenigstens einem Sensorgehäuse integriert.

Insbesondere zur Einstellung der Empfindlichkeit weisen derartige Sensoren ein Stellelement wie zum Beispiel ein Potentiometer auf. Bei optischen Sensoren kann die Einstellung der Empfindlichkeit in Form einer Schwellwerteinstellung ausgebildet sein, wobei der Schwellwert zur Bewertung der Empfangssignale des Empfängers dient. Für diese Einstellung ist bei bekannten Sensoren an einer Außenseite des Sensorgehäuses ein Bedienteil vorgesehen, das ein Schrauben-Mitnahmeprofil wie einen Schlitz oder einen Kreuzschlitz aufweist. Mit einem geeigneten Werkzeug, insbesondere einem Schraubendreher, kann dann das an der Außenseite des Sensorgehäuses freiliegende Bedienteil betätigt, das heißt um seine Längsachse gedreht werden, wodurch eine Einstellung des Stellelements erfolgt.

Nachteilig hierbei ist, dass das zur Einstellung benötigte Werkzeug oft am Einbauort des Sensors nicht zur Verfügung steht. Weiterhin sind die Sensoren oft in schwer zugänglichen, beengten Einbauorten installiert, wo nicht genügend Freiraum vorhanden ist, um das Werkzeug an das Bedienteil heranzuführen.

Der Erfindung liegt die Aufgabe zugrunde, eine einfach zu handhabende Einstellmöglichkeit für einen Sensor der eingangs genannten Art zu schaffen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Sensor dient zur Erfassung von Objekten in einem Überwachungsbereich und umfasst wenigstens ein Sensorgehäuse, in welchem Sensorkomponenten integriert sind. An einer Außenseite des Sensorgehäuses ist ein mittels eines Werkzeugs betätigbares Bedienteil zur Einstellung eines Stellelements vorgesehen. An dem Bedienteil ist ein manuell bedienbarer Knopf anbringbar. Dieser ist mit dem Bedienteil so verbunden, dass durch die manuelle Bedienung des Knopfes das Bedienteil betätigt werden kann.

Bei dem erfindungsgemäßen Sensor ist eine flexiblere und verbesserte Einstellmöglichkeit dadurch gegeben, dass zur Einstellung des Stellelements das Bedienteil an der Außenseite des Sensorgehäuses sowohl mittels eines Werkzeugs als auch mittels des Knopfes manuell betätigt werden kann.

Hierbei ist weiter vorteilhaft, dass der Knopf werkzeuglos mit dem Bedienteil verbindbar und von diesem lösbar ist.

Somit kann der Knopf, je nachdem ob eine Einstellung des Stellelements mit oder ohne Werkzeug erfolgen soll, schnell und einfach auf das Bedienteil aufgesetzt oder von diesem abgenommen werden.

Soll die Einstellung des Stellelements mit einem Werkzeug erfolgen, wird der Knopf nicht benötigt, da dann das Bedienteil direkt mit dem Werkzeug betätigt wird. Das Werkzeug bildet bevorzugt einen Schraubendreher, der in ein Schrauben-Mitnahmeprofil des Bedienteils greift, wobei beispielsweise das Schrauben-Mitnahmeprofil als Schlitz, Kreuzschlitz, Torx, Vierkant oder Sechskant ausgebildet ist.

Soll dagegen die Einstellung des Stellelements werkzeuglos, das heißt manuell erfolgen, so wird der manuell bedienbare Knopf auf das Bedienteil aufgesetzt. Wesentlich hierbei ist die Mitnehmerfunktion des Knopfes, die bewirkt, dass bei einem manuellen Bedienen des Knopfes auch das Bedienteil mitbetätigt wird, so dass das Stellelement eingestellt wird.

Besonders vorteilhaft ist das Bedienteil zur Betätigung bezüglich einer Drehachse und der an dem Bedienteil angebrachte Knopf um dieselbe Drehachse drehbar, das heißt durch manuelles Drehen des Knopfes wird das Bedienteil mitgedreht.

Die Mitnehmerfunktion kann besonders vorteilhaft von einem Werkzeugeinsatz des Knopfes realisiert sein, der bei Aufsetzen des Knopfes mit dem Bedienteil eine formschlüssige Verbindung bildet.

Damit der Knopf leicht zu handhaben ist und insbesondere leicht gedreht werden kann, weist die äußere Mantelfläche des Knopfes eine handgriffige Kontur auf.

Insbesondere weist die äußere Mantelfläche des Knopfes eine Rändelstruktur oder eine Mehrkantform auf.

Der Knopf weist eine kleine Bauform auf und kann damit an dem Sensor nahezu ohne zusätzlichen Platzbedarf angebracht werden. Insbesondere kann der Knopf am Bedienteil auch dann montiert werden, wenn der Sensor an einem schwer zugänglichen Einbauort installiert ist.

Weiterhin ist vorteilhaft, dass der Knopf kostengünstig herstellbar ist, wobei dieser besonders vorteilhaft von einem Kunststoff-Spritzgußteil gebildet ist.

Schließlich ist vorteilhaft, dass der am Bedienteil fixierte Knopf mit dem Sensor eine Einheit bildet, die stabil gegen mechanische Belastungen, insbesondere Schwingungs- und Schockbelastungen ist.

Gemäß einer vorteilhaften Weiterbildung der Erfindung kann der Knopf auch derart ausgebildet sein, dass er in zwei verschiedenen Orientierungen auf das Bedienteil aufsetzbar ist. In der ersten Orientierung wird eine Mitnehmerfunktion derart erhalten, dass bei einem Bedienen, insbesondere Drehen des Knopfes das Bedienteil mitbetätigt, insbesondere mitgedreht wird. In der zweiten Orientierung ist dagegen die Mitnehmerfunktion nicht gegeben. In diesem Fall kann durch den aufgesetzten Knopf das Bedienteil gegen ungewolltes Betätigen geschützt werden.

Schließlich kann der Knopf auch derart weitergebildet sein, dass auch dieser selbst ein Schrauben-Mitnahmeprofil aufweist, so dass der Knopf alternativ manuell oder mit einem Werkzeug wie einem Schraubendreher betätigt werden kann.

Die Erfindung wird im Folgenden anhand der Zeichnungen erläutert. Es zeigen:
- Figur 1:: Seitenansicht eines optischen Sensors mit einem Bedienteil an der Außenseite des Sensorgehäuses.
- Figur 2:: Draufsicht auf die Oberseite des optischen Sensors gemäß Figur 1.
- Figur 3:: Seitenansicht des optischen Sensors gemäß Figur 1 mit einem auf das Bedienteil aufgesetzten Knopf.
- Figur 4:: Draufsicht auf die Oberseite des optischen Sensors gemäß Figur 1.
- Figur 5:: Erste perspektivische Einzeldarstellung des Knopfes gemäß den Figuren 3 und 4.
- Figur 6:: Zweite perspektivische Einzeldarstellung des Knopfes gemäß den Figuren 3 und 4.
- Figur 7:: Schnittdarstellung des Knopfes gemäß den Figuren 5 und 6.
- Figur 8:: Schnittdarstellung des am Bedienteil fixierten Knopfes gemäß den Figuren 3 bis 6.
- Figur 9:: Schnittdarstellung des Bedienteils mit einer weiteren Ausführungsform eines Knopfes.

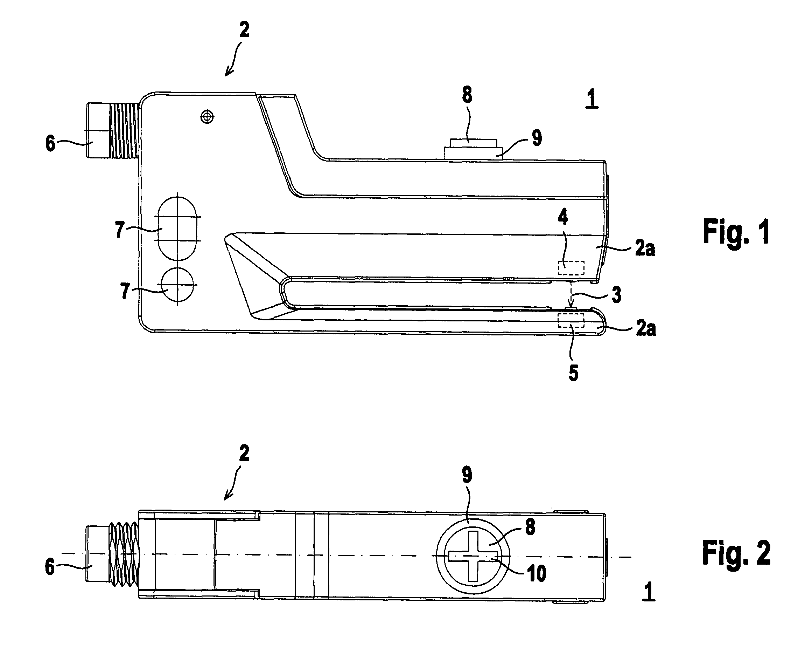

Die Figuren 1 und 2 zeigen einen optischen Sensor 1 als Ausführungsbeispiel des erfindungsgemäßen Sensors 1. Prinzipiell kann der Sensor 1 auch als Ultraschallsensor oder kapazitiver Sensor ausgebildet sein.

Der optische Sensor 1 bildet eine Gabellichtschranke und weist ein gabelförmiges Sensorgehäuse 2 mit zwei parallel in Abstand zueinander verlaufenden Gabelarmen 2a auf. Wie in Figur 1 schematisch dargestellt, ist in einem Gabelarm 2a ein Lichtstrahlen 3 emittierender Sender 4 und im gegenüberliegenden Gabelarm 2a ein Lichtstrahlen 3 empfangender Empfänger 5 vorgesehen. Objekte, die im Überwachungsbereich, das heißt dem Bereich zwischen den Gabelarmen 2a angeordnet sind, werden dadurch erfasst, dass eine durch das jeweilige Objekt bedingte Unterbrechung des Strahlengangs der Lichtstrahlen 3 vom Sender 4 zum Empfänger 5 detektiert wird. Hierzu ist im Sensorgehäuse 2 eine nicht dargestellte Auswerteeinheit integriert, in welcher die Empfangssignale mit einem Schwellwert bewertet werden, wodurch ein binäres Objektfeststellungssignal generiert wird, dessen Schaltzustände angeben ob ein Objekt im Überwachungsbereich vorhanden ist oder nicht.

Am Sensorgehäuse 2 befindet sich weiterhin ein Steckeranschluss 6 für den elektrischen Anschluss des Sensors 1. Weiterhin sind im Sensorgehäuse 2 Befestigungsbohrungen 7 zum Verbinden des Sensors 1 mit einer Befestigungseinrichtung vorgesehen.

Die Empfindlichkeit des optischen Sensors 1 kann durch Variation des Schwellwerts eingestellt werden. Die Variation des Schwellwerts erfolgt über ein Stellelement in Form eines Potentiometers, welches wiederum über ein Bedienteil 8 an der Oberseite des Sensorgehäuses 2 eingestellt werden kann.

Generell können mit einem solchen Bedienteil 8 auch andere Stellelemente betätigt werden. Ein erstes Beispiel hierfür ist ein Drehschalter. Weitere Beispiele sind Spindeln oder Wellen, mit welchen Bauteile wie Optiken verstellt werden können.

Wie aus den Figuren 1 und 2 ersichtlich, ist das Bedienteil 8 in einem hohlzylindrischen Gehäusesegment 9, das an der Oberseite des Sensorgehäuses 2 ausmündet, gelagert. Das Bedienteil 8 ist dabei um eine Drehachse drehbar, die mit der Symmetrieachse des Gehäusesegments 9 zusammenfällt. An der Oberseite des Bedienteils 8 befindet sich, wie aus Figur 2 ersichtlich, ein Schrauben-Mitnahmeprofil, das im vorliegenden Fall von einem Kreuzschlitz 10 gebildet ist. Anstelle eines Kreuzschlitzes 10 kann auch ein einfacher Schlitz, ein Torx, ein Vierkant, ein Sechskant, das heißt ein Inbus oder dergleichen vorgesehen sein.

Zur Einstellung des Potentiometers kann dann als Werkzeug ein Schraubendreher in den Kreuzschlitz 10 eingeführt und dann das Bedienteil 8 gedreht werden.

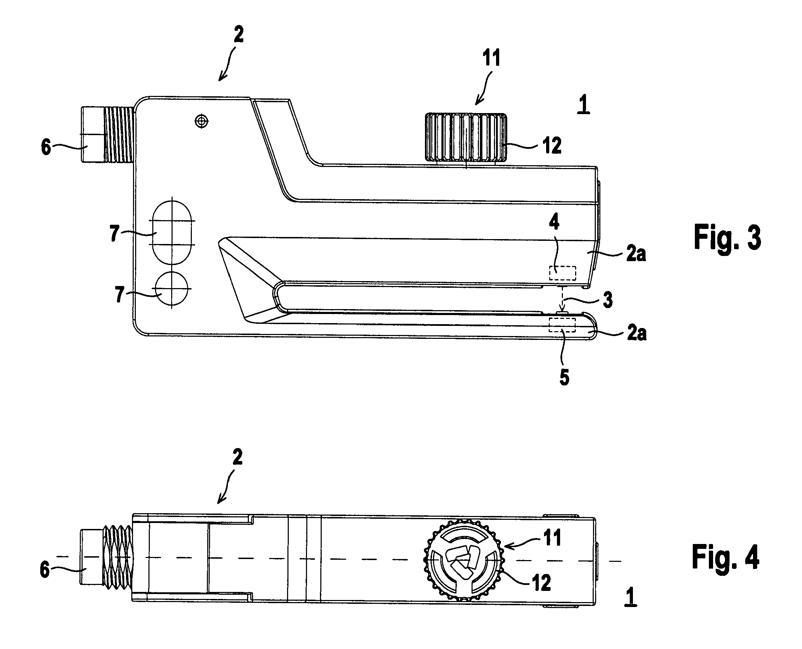

Alternativ kann auch eine manuelle werkzeuglose Einstellung des Potentiometers dadurch ermöglicht werden, dass, wie in den Figuren 3 und 4 dargestellt, ein Knopf 11 auf dem Gehäusesegment 9 mit dem Bedienteil 8 angebracht wird. Der Knopf 11 weist eine Mitnehmerfunktion derart auf, dass bei Drehen des Knopfes 11 das Bedienteil 8 mitgedreht wird, wodurch das Potentiometer eingestellt wird.

Die Drehachse, um welche der Knopf 11 drehbar ist, fällt dabei mit der Drehachse des Bedienteils 8 zusammen. Wie aus den Figuren 3 und 4 ersichtlich, weist der Knopf 11 an seiner äußeren Mantelfläche eine handgriffige Kontur in Form einer Rändelstruktur 12 auf. Alternativ kann die handgriffige Kontur auch in Form eines Mehrkants, wie einem Vier- oder Sechskant, ausgebildet sein. An der so ausgebildeten handgriffigen Kontur kann eine Bedienperson den Knopf 11 bequem anfassen und drehen.

Der Knopf 11 kann ohne Werkzeuge auf dem Bedienteil 8 und Gehäusesegment 9 fixiert und von diesem gelöst werden.

Der Knopf 11 weist einen geringen Platzbedarf auf. Insbesondere weist der Knopf 11 eine geringe Bauhöhe auf, so dass der auf dem Bedienteil 8 aufsitzende Knopf 11 nicht über den erhöhten hinteren Bereich des Sensorgehäuses 2 hervorsteht.

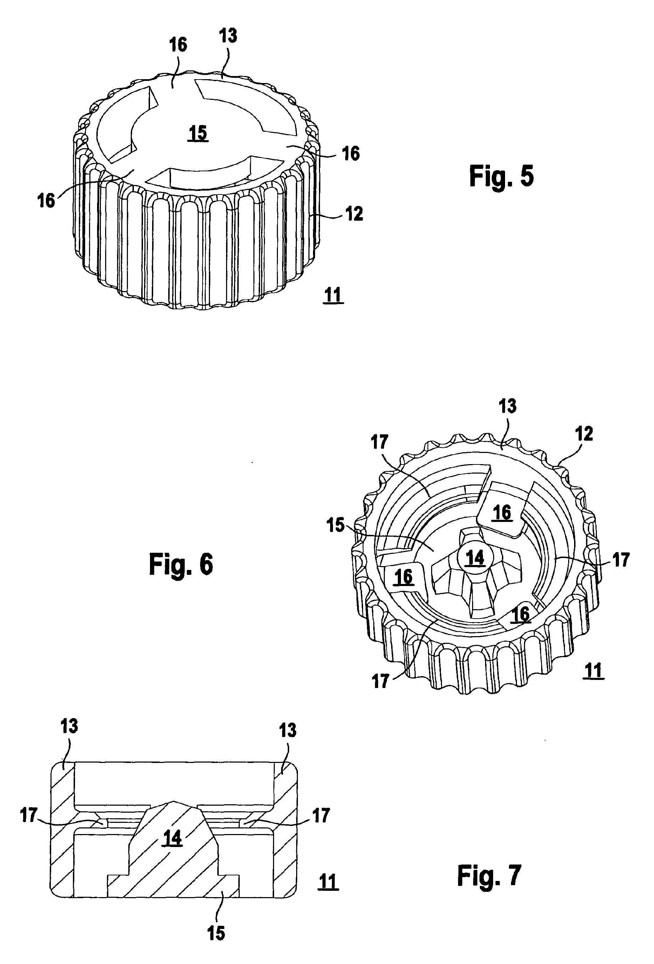

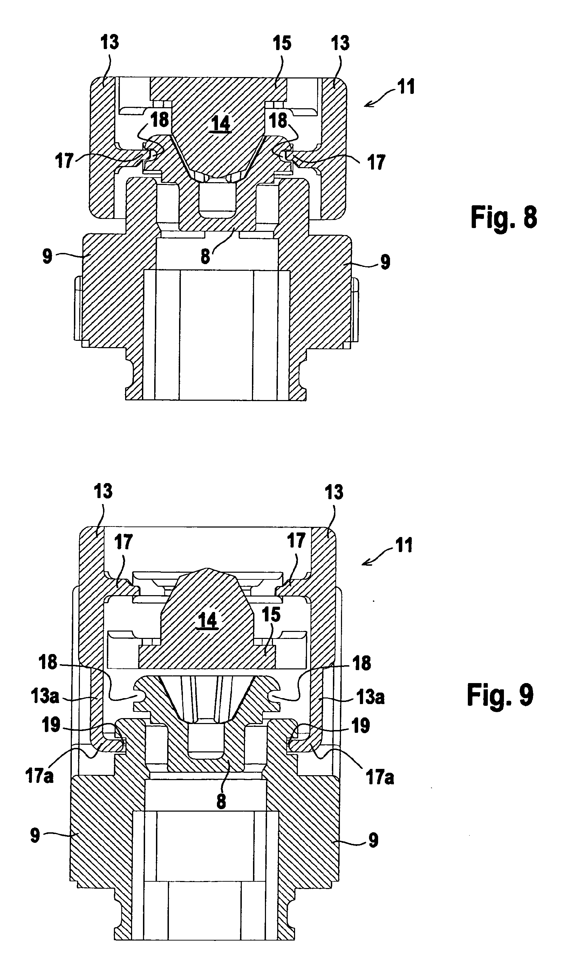

Die Figuren 5 bis 7 zeigen eine Einzeldarstellung des Knopfes 11. Figur 8 zeigt eine Längsschnittdarstellung des auf dem Bedienteil 8 und Gehäusesegments 9 angeordneten Knopfes 11.

Der Knopf 11 besteht aus einem Kunststoff-Spritzgußteil und weist, wie insbesondere aus den Figuren 5 bis 7 ersichtlich, einen hohlzylindrischen Grundkörper 13 auf, an dessen äußerer Mantelfläche die Rändelstruktur 12 vorgesehen ist.

Im Innenraum des Grundkörpers 13 des Knopfes 11 ist ein Werkzeugeinsatz 14 vorgesehen, der eine zum Kreuzschlitz 10 des Bedienteils 8 komplementäre Profilstruktur aufweist. Dieser Werkzeugeinsatz 14 liegt hinter der offenen unteren Stirnseite des Grundkörpers 13 frei, wie aus Figur 6 ersichtlich ist. Der Werkzeugeinsatz 14 sitzt auf einem kreisscheibenförmigen Bodenteil 15 auf, das im Bereich der oberen Stirnseite des Grundkörpers 13 vorgesehen ist. Das Bodenteil 15 ist über drei Stege 16 mit dem Grundkörper 13 verbunden. Zwischen den Stegen 16 befinden sich Aussparungen, die als durch das Werkzeug für das Kunststoff-Spritzgußteil vorgegebene Entformfenster ausgebildet sind.

Weiterhin stehen von der Innenwand des Grundkörpers 13 drei identisch ausgebildete Schnappnasen 17 als weitere Bestandteile des Knopfes 11 hervor. Die Schnappnasen 17 sind durch die Entformfenster begrenzt. Alternativ können Hinterschnitte durch Zwangsentformungen bei der Herstellung entsprechender Kunststoffspritzgussteile eingesetzt werden.

Die Funktionsweise des Knopfes 11, insbesondere dessen Zusammenwirken mit dem Bedienteil 8 und dem Gehäusesegment 9, ist in Figur 8 dargestellt. In Figur 8 ist das hohlzylindrische Gehäusesegment 9 und das darin drehbar gelagerte Bedienteil 8 in einem Längsschnitt dargestellt. Der Knopf 11 ist auf diese Einheiten so aufgesetzt, dass die Schnappnasen 17 des Knopfes 11 einer in Umfangsrichtung umlaufenden Nut 18 an der äußeren Mantelfläche des Bedienteils 8 greifen. Durch die so ausgebildeten Verbindungselemente wird eine Drehlagerung des Knopfes 11 an dem Bedienteil 8 erhalten.

Gleichzeitig greift der Werkzeugeinsatz 14 mit seiner Profilstruktur in den Kreuzschlitz 10 des Bedienteils 8 und bildet mit diesem eine formschlüssige Verbindung. Durch die so hergestellte formschlüssige Verbindung zwischen dem Werkzeugeinsatz 14 und dem Bedienteil 8 wird die Mitnehmerfunktion erzielt, die bewirkt, dass sich das Bedienteil 8 bei manuellem Drehen des Knopfes 11 mitdreht.

Die Verbindungselemente in Form der Schnappnasen 17 und der Nuten 18 bilden eine Schnappverbindung, die ohne Werkzeuge schnell und einfach hergestellt und wieder gelöst werden kann. Die Schnappverbindung wird dabei einfach dadurch hergestellt, dass der Knopf 11 auf das Bedienteil 8 aufgedrückt wird. Zum Lösen der Verbindung wird der Knopf 11 unter leichtem Verkippen vom Bedienteil 8 abgezogen.

Anstelle einer Schnapp-Verbindung können auch andere Fügetechniken wie Nieten und dergleichen zum Einsatz kommen.

Figur 9 zeigt eine Erweiterung der Ausführungsform gemäß Figur 8. Die Ausbildung des Sensorgehäuses 2 und des Bedienteils 8 ist dahingehend erweitert, dass nicht nur am Bedienteil 8 eine in Umfangsrichtung umlaufende Nut 18 als Verbindungselement vorgesehen ist. Vielmehr ist auch an der äußeren Mantelfläche des Gehäusesegments 9 eine umlaufende Nut 19 vorgesehen.

Der Knopf 11 der Ausführungsform gemäß Figur 9 ist gegenüber der Ausführungsform gemäß Figur 8 dahingehend erweitert, dass an den Grundkörper 13 ein hohlzylindrisches Grundkörpersegment 13a anschließt, das den Grundkörper 13 über seine ursprüngliche obere Stirnseite hinaus verlängert. Am Rand des Grundkörpersegments 13a sind weitere Schnappnasen 17a vorgesehen.

Damit kann der Knopf 11 sowohl mit seiner Unterseite als auch mit seiner Oberseite auf das Bedienteil 8 mit dem Gehäusesegment 9 aufgesetzt werden. Wird der Knopf 11 mit seiner Unterseite auf das Bedienteil 8 aufgesetzt so wird die Figur 8 entsprechende Konstellation erhalten, das heißt die Schnappnasen 17 greifen in die Nut 18 des Bedienteils 8 und der Werkzeugeinsatz 14 bildet einen Formschluss mit dem Bedienteil 8, so dass bei Drehen des Knopfes 11 das Bedienteil 8 mitgedreht wird.

Figur 9 zeigt die zweite Konfiguration wenn der Knopf 11 mit seiner Oberseite auf das Bedienteil 8 aufgesetzt wird. Dann ist der Werkzeugeinsatz 14 dem Bedienteil 8 abgewandt, das heißt Bedienteil 8 und Werkzeugeinsatz 14 sind außer Eingriff gebracht. Anstelle dessen wird eine Verbindung zwischen Knopf 11 und Gehäusesegment 9 dadurch erhalten, dass die Schnappnasen 17a des Grundkörpersegments 13a in die Nut 19 des Gehäusesegments 9 greifen und so eine Schnappverbindung bilden, durch welche der Knopf 11 am Gehäusesegment 9 drehbar gelagert ist. Dabei sind jedoch der Werkzeugeinsatz 14 und das Bedienteil 8 außer Eingriff. Somit führt ein Drehen des Knopfes 11 nicht zum Drehen des Bedienteils 8. Vielmehr ist das Bedienteil 8 durch den Knopf 11 gegen ein ungewolltes Betätigen geschützt, das heißt das Bedienteil 8 kann nun auch nicht mehr mit einem Schraubendreher betätigt werden.

### Bezugszeichenliste

- (1): Optischer Sensor
- (2): Sensorgehäuse
- (2a): Gabelarm
- (3): Lichtstrahlen
- (4): Sender
- (5): Empfänger
- (6): Steckeranschluss
- (7): Befestigungsbohrung
- (8): Bedienteil
- (9): Gehäusesegment
- (10): Kreuzschlitz
- (11): Knopf
- (12): Rändelstruktur
- (13): Grundkörper
- (13a): Grundkörpersegment
- (14): Werkzeugeinsatz
- (15): Bodenteil
- (16): Steg
- (17): Schnappnase
- (17a): Schnappnase
- (18): Nut
- (19): Nut

## Patentansprüche

1. Sensor (1) zur Erfassung von Objekten in einem Überwachungsbereich, mit wenigstens einem Sensorgehäuse (2), in welchem Sensorkomponenten integriert sind, wobei an einer Außenseite des Sensorgehäuses (2) ein mittels eines Werkzeugs betätigbares Bedienteil (8) zur Einstellung eines Stellelements vorgesehen ist, **dadurch gekennzeichnet, dass** an dem Bedienteil (8) ein manuell bedienbarer Knopf (11) anbringbar ist, wobei dieser mit dem Bedienteil (8) so verbunden ist, dass durch die manuelle Bedienung des Knopfes (11) das Bedienteil (8) betätigt ist.

2. Sensor nach Anspruch 1, **dadurch gekennzeichnet, dass** der Knopf (11) werkzeuglos mit dem Bedienteil (8) verbindbar und von diesem lösbar ist.

3. Sensor nach einem der Ansprüche 1 oder 2, **dadurch gekennzeichnet, dass** das Bedienteil (8) zur Betätigung bezüglich einer Drehachse drehbar ist, und dass der an dem Bedienteil (8) angebrachte Knopf (11) um dieselbe Drehachse drehbar ist.

4. Sensor nach Anspruch 3, **dadurch gekennzeichnet, dass** das Bedienteil (8) in einem hohlzylindrischen Gehäusesegment (9) des Sensorgehäuses (2) drehbar gelagert ist.

5. Sensor nach einem der Ansprüche 1 bis 4, **dadurch gekennzeichnet, dass** die äußere Mantelfläche des Knopfes (11) eine handgriffige Kontur aufweist.

6. Sensor nach Anspruch 5, **dadurch gekennzeichnet, dass** die äußere Mantelfläche des Knopfes (11) eine Rändelstruktur (12) oder eine Mehrkantform aufweist.

7. Sensor nach Anspruch 6, **dadurch gekennzeichnet, dass** der Knopf (11) zusätzlich ein Schrauben-Mitnahmeprofil aufweist.

8. Sensor nach einem der Ansprüche 3 bis 6, **dadurch gekennzeichnet, dass** an dem Knopf (11) und an dem Bedienteil (8) oder dem Gehäusesegment (9) Verbindungselemente vorgesehen sind, mittels derer eine Drehlagerung des Knopfes (11) herstellbar ist.

9. Sensor nach Anspruch 8, **dadurch gekennzeichnet, dass** als erste Verbindungselemente am Knopf (11) Schnappnasen (17) vorgesehen sind, die in Nuten (18, 19) des Bedienteils (8) oder des Gehäusesegments (9) einführbar sind.

10. Sensor nach einem der Ansprüche 8 oder 9, **dadurch gekennzeichnet, dass** der Knopf (11) einen Werkzeugeinsatz (14) aufweist, der mit dem Bedienteil (8) eine formschlüssige Verbindung bildet, wenn über die Verbindungselemente die Drehlagerung des Knopfes (11) hergestellt ist, so dass durch den Werkzeugeinsatz (14) eine Drehbewegung des Knopfes (11) auf das Bedienteil (8) übertragen ist.

11. Sensor nach Anspruch 10, **dadurch gekennzeichnet, dass** das Bedienteil (8) ein Schrauben-Mitnahmeprofil aufweist, in welches eine hierzu komplementäre Profilstruktur des Werkzeugeinsatzes (14) einführbar ist, wobei das Schrauben-Mitnahmeprofil als Schlitz, Kreuzschlitz (10), Torx, Vierkant oder Sechskant ausgebildet ist.

12. Sensor nach einem der Ansprüche 10 oder 11, **dadurch gekennzeichnet, dass** der Knopf (11) einen hohlzylindrischen Grundkörper (13) aufweist, in dessen Innenraum die Verbindungselemente und der Werkzeugeinsatz (14) angeordnet sind.

13. Sensor nach Anspruch 12, **dadurch gekennzeichnet, dass** der Knopf (11) mit einer ersten Stirnseite auf das Gehäusesegment (9) mit dem Bedienteil (8) aufsetzbar ist, so dass der Werkzeugeinsatz (14) einen Formschluss mit dem Bedienteil (8) bildet, und dass der Knopf (11) mit seiner zweiten Stirnseite auf das Gehäusesegment (9) aufsetzbar ist, so dass der Werkzeugeinsatz (14) außer Eingriff mit dem Bedienteil (8) ist.

14. Sensor nach einem der Ansprüche 1 bis 13, **dadurch gekennzeichnet, dass** das Stellelement ein Potentiometer, ein Drehschalter oder eine Spindel zum Verfahren eines Bauelements ist.

15. Sensor nach einem der Ansprüche 1 bis 14, **dadurch gekennzeichnet, dass** dieser ein optischer Sensor ist.
